# EUROPEAN PATENT SPECIFICATION

(11) **EP 3 596 742 B1**
(45) Date of publication and mention of the grant of the patent: **21.04.2021**
(21) Application number: 18714625.3
(22) Date of filing: 12.03.2018
(51) Int. Cl.: H01F 38/14, H01F 7/02, H01R 13/62, H01R 13/66, H01R 31/06

(54) **ADAPTER ASSEMBLY FOR CONTACTLESS TRANSFER OF ELECTRICAL POWER**
ADAPTERANORDNUNG ZUR KONTAKTLOSEN ÜBERTRAGUNG VON STROM
ENSEMBLE ADAPTATEUR POUR TRANSFERT SANS CONTACT D'ÉNERGIE ÉLECTRIQUE

(30) Priority: 13.03.2017 NO 20170364
(43) Date of publication of application: 22.01.2020
(73) Proprietor: Arne Veidung Innovasjon AS, 5020 Bergen (NO)
(72) Inventor: VEIDUNG, Arne, 5230 Paradis (NO)
(74) Representative: Acapo AS
(86) International application number: PCT/NO2018/050072
(87) International publication number: WO 2018/169409

(56) References cited:
- WO-A1-2006/077498
- WO-A1-2013/072045
- DE-B3-102012 212 254
- JP-A- 2009 159 677
- JP-U- S55 106 984
- US-A1- 2003 186 593
- US-A1- 2013 303 024
- US-A1- 2014 306 546

## Description

### Field of the invention

The present invention is related to an adapter assembly for contactless transfer of electrical power, comprising a female receptacle and a male plug, wherein the female receptacle and the male plug are provided with corresponding magnetic fastening means, respectively, for mutual connection by means of a magnetic force, wherein the female receptacle and male plug are provided with means for contactless transfer of electrical power in that the female receptacle comprises a primary side of a transformer and the male plug comprises a secondary side of the transformer, such that when the female receptacle and male plug are connected together via the magnetic fastening means, the transformer is capable of transferring power from the female receptacle to the male plug without physical contact between power transferring parts.

The present invention is especially related to an adapter assembly for contactless transfer of electrical power between an AC power supply and a consumer, such as an electric device, providing a simpler and safer use of electric equipment.

### Background

There is known a variety of different electrical receptacles, also known as electrical outlets, being used around the world. In e.g. https://www.skyscanner.no/nyheter/ alt-du-trenger-vite-om-internasjonale-stikkontakter-og-reiseadaptere many of the most used solutions are described.

In US3363214 is disclosed a magnetic plug adapter having plugs at one end to be received in conventional baseboard sockets provided with socket terminals on the other end which taper to receive, a second adapter having tapered contacts on one end and sockets on the other end to receive the prongs of a conventional plug. A magnet is disposed in each of the mating faces of the two adapters to and the holding strength thereof is such as to permit separation between the adapters rather than between the first named adapter and receptacles.

From WO2014088215 A1 it is known a plug-type outlet cover set, and method for setting same, wherein a plug adapter and an outlet cover are used so that the outlet cover is inserted into a power outlet and a power plug is inserted into the plug adapter, magnets are built into the plug adapter and the outlet cover so that the plug adapter and the outlet cover are attached by using the magnetic force therein in order for electricity to be used, and the power is cut by the magnet in the outlet cover when the outlet cover set is removed so that accidents such as an electric shock can be prevented.

In US9083110 it is described a quick disconnect power adapter for maintaining a connection between a plug and a receptacle. In various embodiments, the quick disconnect power adapter maintains a completed circuit for providing power from a power source to an electrical device with a releasable fastener. In particular embodiments, the releasable fastener includes one or more magnets. In various embodiments, the quick disconnect power adapter is configured such that the electrical contact points of the plug and receptacle cannot be touched or otherwise contacted by a user when the plug and receptacle are not engaged.

The main disadvantage of the prior art solutions is that they require a physical contact between electrically conducting parts/elements. In US3363214 and US9083110 there are arranged conductors in the plug adapter, while in WO2014088215 a core magnet in the plug adapter is used for physically connecting the electrically conducting parts/elements.

US 2013/0303024 A1 discloses a safety electrical interconnect that mitigates shock risk, it adapts into standard electrical sockets, outlets or electrical wiring; it conceals electrically energized contacts yet is capable of transferring electrical energy between at least two parts inductively. A first part of the invention is capable of being plugged directly into a standard electrical socket or outlet using a plurality of prongs or pins protruding from at least a first surface. This first part is capable of passing electrical energy wirelessly using inductive transformer action when connected to one or more second parts of the invention. These second parts of the invention have one or more female connections capable of receiving prongs or pins from an electrical appliance or machine plug.

JP H10208804 A discloses a device comprising a sealed/waterproof receptacle with a built-in induction coil to which electric power is applied, and an adapter which is equipped with an induction coil that is placed in a magnetic field made by the induction coil when it is mounted on the receptacle while is equipped with a power supply regulating part which turns an output of the induction coil into an output corresponding with specifications of a load and with a receptacle part for load connection. The adapter is attachable/ detachable relative to the receptacle. Because the receptacle part for load connection is provided to the adapter which carries out non-contact power transmission to and from the receptacle by means of electromagnetic induction, the receptacle itself can have a completely waterproof structure through it can be connected with an ordinary load.

US 2003/186593 A1 disclose an electric plug provided with at least one track adapted for receiving a clip for easy handling of the plug-in connection with arrangement from a receptacle.

WO 2006/077498 A1 describes an apparatus that allows the transmission of electric current between an electric source and an electric device comprising a primary element connected to said electric source and a secondary element connected to said electric device, such elements being electrically insulated and interacting between each other only through a magnetic field.

US 2014/306546 A1 relates to a voltage converter for converting an input voltage to an output voltage and an inductive power coupling for the inductive transfer of electric power.

Reference is also made to JP S55 106984 U, DE 10 2012212254 B3, JP 2009 159677 A, and WO 2013/072045 A1.
A further disadvantage of the prior art solutions is that they provide no suitable fixed arrangement of the receptacle adapter to the electrical receptacle.

It is further a disadvantage of the prior art solutions that they are not arranged for suitable transformation of transferred electrical power.

A disadvantage of prior art is further that they make use of movable parts which are exposed to wear and accordingly constitute a risk for heat generation and fire. There is accordingly a need for an adapter assembly that removes the need for physical contact between electrically conducting parts/elements in the female receptacle and the male plug.

There is further a need for an adapter assembly that provides a safer installation of the female receptacle to a junction box/electrical receptacle.

It is further a need for an adapter assembly capable of transforming supplied electrical power to desired electrical power for an electrical device connected at the other side.

There is further a need for an adapter assembly without movable parts reducing the wear and risk for heat generation and fire.

### Objects of the present invention

The main object of the present invention is to provide an adapter assembly for contactless transfer of electrical power partly or entirely solving the above mentioned drawbacks of prior art.

It is further an object of the present invention to provide an adapter assembly for contactless transfer of electrical power which provides simpler and safer use of electric equipment for the user.
An object of the present invention is to provide an adapter assembly for contactless transfer of electrical power which can be retrofitted or replacing existing electrical receptacles and plugs for increasing the safety.

It is an object of the present invention to provide an adapter assembly for contactless transfer of electrical power increasing the safety and preventing children and youngster or others from getting electric shock at unconventional contact.

It is further an object of the present invention to provide an adapter assembly for contactless transfer of electrical power which can be adapted all standards of receptacles and plugs, as well as power supply grid standards.

An object of the present invention is to provide an adapter assembly for contactless transfer of electrical power which can be easily attached to or detached from existing receptacles or plugs.

It is further an object of the present invention to provide an adapter assembly for contactless transfer of electrical power which removes the need for physical contact between electrical power transferring parts.

There is further an object of the present invention to provide an adapter assembly for contactless transfer of electrical power that eliminates current leakage in wall-mounted electrical receptacle.

An object of the present invention is to provide an adapter assembly for contactless transfer of electrical power without mechanical wear due to fixed installation.

It is further an object of the present invention to provide an adapter assembly without movable parts/components reducing the risk of heat generation and fire. Further objects of the present invention will appear from consideration of the following description, claims and attached drawings.

It is also an object to provide a more secure fastening between the female receptacle and the male plug.

### Summary of the invention

An adapter assembly for contactless transfer of electrical power according to the present invention is disclosed in claim 1. Preferable features of the adapter assembly are disclosed in the remaining claims.

According to the invention an adapter assembly for contactless transfer of electrical power is provided, comprising a female receptacle and a male plug, wherein the female receptacle and the male plug are provided with corresponding magnetic fastening means, respectively, for mutual connection by means of a magnetic force, wherein the female receptacle and male plug are provided with means for contactless transfer of electrical power in that the female receptacle comprises a primary side of a transformer and the male plug comprises a secondary side of the transformer, such that when the female receptacle and the male plug are connected together via the magnetic fastening means, the transformer is capable of transferring power from the female receptacle to the male plug without physical contact between power transferring parts. The female receptacle comprises a main body accommodating the primary side of the transformer and the magnetic fastening means, the magnetic fastening means being recessed in the main body, and the male plug comprises a main body accommodating the secondary side of the transformer and the magnetic fastening means, the magnetic fastening means protruding from the main body, wherein a front side of the main body of the female receptacle comprises two or more circular female recesses with magnetic fastening means arranged for receiving and accommodating the magnetic fastening means of the male plug, and a front side of the main body of the male plug comprises two or more circular male protrusions with magnetic fastening means adapted for arrangement to the magnet fastening means of the female receptacle.

The female receptacle can be connected to an AC power supply cord.

The male plug can also be connected to an AC power supply cord.

The female receptacle can be a female connector and the male plug can be a male connector, for connection of two AC power supply cords.

Two or more female receptacles can be provided in the main body, one above the other, wherein the main body is a receptacle cover or cover box arranged for placement on a wall, and the female receptacle are connected to an AC power supply.

Two or more female receptacles and a junction box can be integrated in a receptacle cover, adapted for arrangement in connection with a cavity of a wall.

The transformer can be arranged for transforming supplied AC current/voltage at a certain frequency to a desired output AC current/voltage of a desired frequency.

The transformer may further be arranged for transforming supplied AC current/voltage to a desired DC current/voltage.

The female receptacle and/or the male plug can be provided with a rectifier unit connected at the secondary side of the transformer.

The female receptacle may further be provided with at least one track adapted for receiving a clip for easy handling of the female receptacle in connection with arrangement to and/or from a standard electrical receptacle.

The female receptacle can be adapted for connection to an AC power supply at one end and the male plug at the other end, the male plug being arranged for connection to a power cord at one end and to the female receptacle at the other end, wherein the female receptacle and male plug are provided with said magnetic fastening means, respectively.

According to the invention a female receptacle for contactless transfer of electrical power is provided, wherein the female receptacle is provided with magnetic fastening means and with means for contactless transfer of electrical power in that the female receptacle comprises a primary side of a transformer for transferring power from the female receptacle to a male plug without physical contact between power transferring parts. The female receptacle comprises a main body accommodating the primary side of the transformer and the magnetic fastening means, the magnetic fastening means being recessed in the main body, wherein a front side of the main body comprises two or more circular female recesses with magnetic fastening means arranged for receiving and accommodating magnetic fastening means of the male plug.

According to the invention a male plug for contactless transfer of electrical power is provided, wherein the male plug is provided with magnetic fastening means and with means for contactless transfer of electrical power in that the male plug comprises a secondary side of a transformer for transferring power from the male plug to a female receptacle without physical contact between power transferring parts. The male plug comprises a main body accommodating the secondary side of the transformer and the magnetic fastening means, the magnetic fastening means protruding from the main body, wherein a front side of the main body comprises two or more circular male protrusions with magnetic fastening means adapted for arrangement to magnet fastening means of the female receptacle.

By the present invention is achieved an adapter assembly for contactless transfer of electrical power which can be retrofitted or replace electrical receptacles and plugs presently used today over the whole world, by adapting the female receptacle to the standard of the power supply grid.

By the present invention is achieved an adapter assembly for contactless transfer of electrical power providing a simpler and safer way to connect an electrical device via a plug to an electrical receptacle.

The present invention also provides increased safety by that there is no physical contact between electrically conductive parts of the female receptacle and male plug. By this is achieved that kids or others will not get electrical shock at untraditional contact with the female receptacle.

By the present invention is provided an adapter assembly for contactless transfer of electrical power which can be arranged for transformation of AC power at a certain frequency to AC power with desired frequency, or from AC power to desired DC power. A transformation to desired DC power removes the need for transformers/converters in the power supply of an electrical device.
The present invention also provides an adapter assembly for contactless transfer of electrical power where the female receptacle can be fixed to the power supply, increasing the safety of the electrical receptacle.

As the present invention contains now movable parts there will be no wear and further the risk for heat generation and fire is reduced.

Further preferable features and advantageous details of the present invention will appear from the following example description, claims and attached drawings.

### Description of the figures

The present invention will below be described in further detail with references to the attached drawings, where:
Fig. 1a-c shows principle drawings of a wall-mounted standard electrical receptacle according to prior art,
Fig. 2a-c shows principle drawings of an adapter assembly for contactless transfer of electrical power according to a first embodiment of the present invention,
Fig. 3a-c shows principle drawings of contactless power transfer means according to the present invention,
Fig. 4 is a principle drawing of a modification of the first embodiment with a principle drawing of a tool for insertion and/or removal of a female receptacle for the adapter assembly according to the present invention to/from a standard electrical receptacle,
Fig. 5a-b shows principle drawings of an adapter assembly for contactless transfer of electrical power according to a second embodiment of the present invention,
Fig. 6 is a principle drawing of a junction box according to prior art, and
Fig. 7 is a principle drawing of a further embodiment of the adapter assembly for contactless transfer of electrical power according to the present invention.
Fig. 8 and 9 shows an adapter assembly for contactless transfer of electrical power according to a further embodiment of the present invention.
Fig. 10 and 11 shows further embodiments of the adapter assembly for contactless transfer of electrical power according to the present invention.

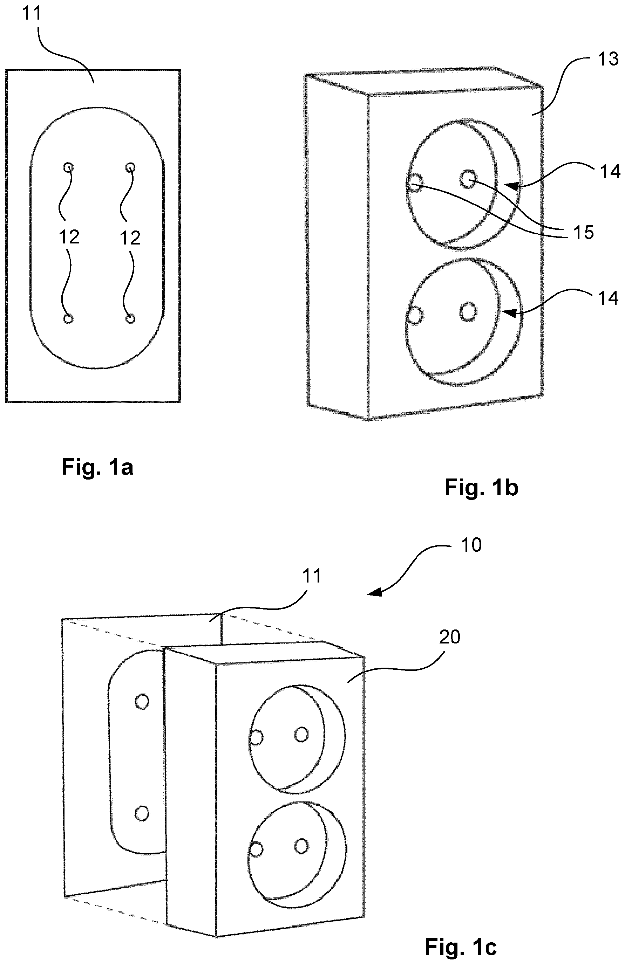

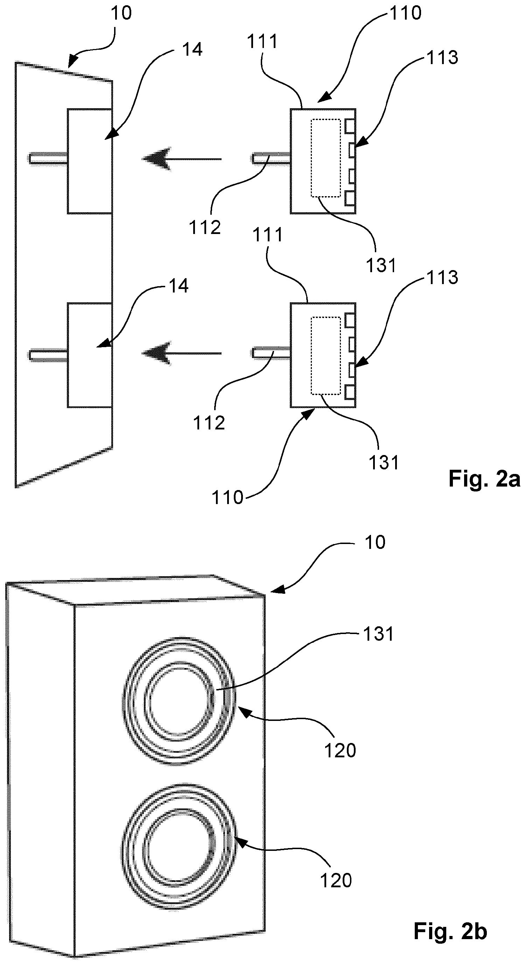

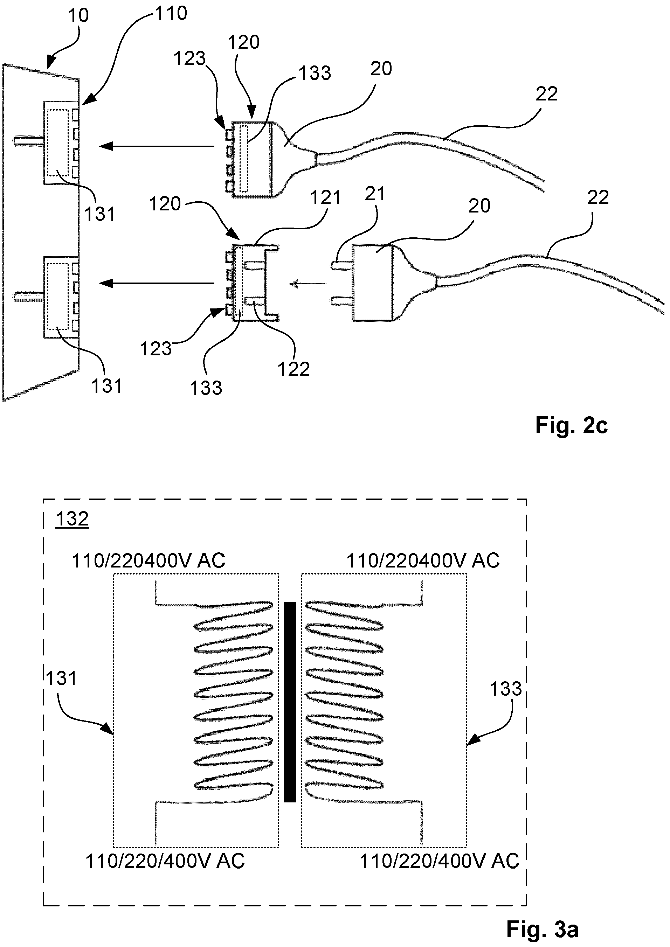

Reference is now made to Figures 1a-c showing a wall mounted standard electrical receptacle 10 according to prior art. The electrical receptacle 10 according to prior art is formed by wall-mounted junction box 11 arranged to connect to an AC power supply grid, which exhibits terminals 12 for receiving conductive connectors 21 of a plug 20 of a power cord 22 (shown in Figure 2c) of a consumer, typically an electrical device. The electrical receptacle 10 further comprises a receptacle cover 13 which is fixed to the junction box 11 and exhibits recesses 14 provided with holes 15 for receiving and accommodating the plug 20 and conductive connectors 21a and the arrange the plug 20 safely to the electrical receptacle 10, as well as protecting the environment from electrically conductive parts.

Reference is now made to Figures 2a-c showing a first embodiment of an adapter assembly for contactless transfer of electrical power according to a first embodiment of the present invention. According to the first embodiment of the adapter assembly according to the present invention the adapter assembly comprises a female receptacle 110 formed by a main body 111 and provided with conductive connectors 112 at one end corresponding to the type of electrical receptacle 10 and at the other end is provided with a magnetic fastening means 113. Accordingly, the female receptacle 110 is adapted to be received in the recesses 14 of the electrical receptacle 10 and provide a magnetic fastening means 113 for connection of a male plug 120 according to the present invention. The male plug 120 of the adapter assembly according to the first embodiment of present invention is formed by a main body 121 which at one end is provided with female conductive connectors 122 adapted for receiving the conductive connectors 21 of a plug 20 and which at the other end is provided with a magnet magnetic fastening means 123 adapted for connection to the female receptacle 110 by magnetic force. Accordingly, with male plugs 120 arranged to the relevant plugs 20 of a power cord 22 any kind of power cord 22 can be connected to the electrical receptacle 10 by means of the adapter assembly according to the present invention.

The magnet fastening means 113 of the female receptacle 110 is preferably recessed in the main body 111, while the magnetic fastening means 123 of the male plug 120 is preferably protruding from the end of the main body 121, such than when the male plug 120 is arranged to the female receptacle 110, the magnetic fastening means 113 of the female receptacle 110 is arranged to receive and accommodate the magnetic fastening means 123 of the male plug 120. The magnetic retaining force of the magnetic fastening means 113, 123 is preferably lower than the retaining force between the conductive connectors 112 and terminals 12 of the junction box 11. In a preferable embodiment the magnetic fastening means 113, 123 exhibit a mainly circular shape. By this is achieved an adequate magnetic connection that will exhibit sufficient magnetic force holding the male plug 120 to the female receptacle 110.

According to the present invention the adapter assembly is further arranged for contactless transfer of electrical power between the electrical receptacle 10 and the male plug 120 by that the female receptacle 110 and male plug 120 are provided with magnetic or inductive means 131, 133, respectively, for contactless transfer of electrical power, which are connected with the conductive connectors 112 and female conductive connectors 122, respectively.

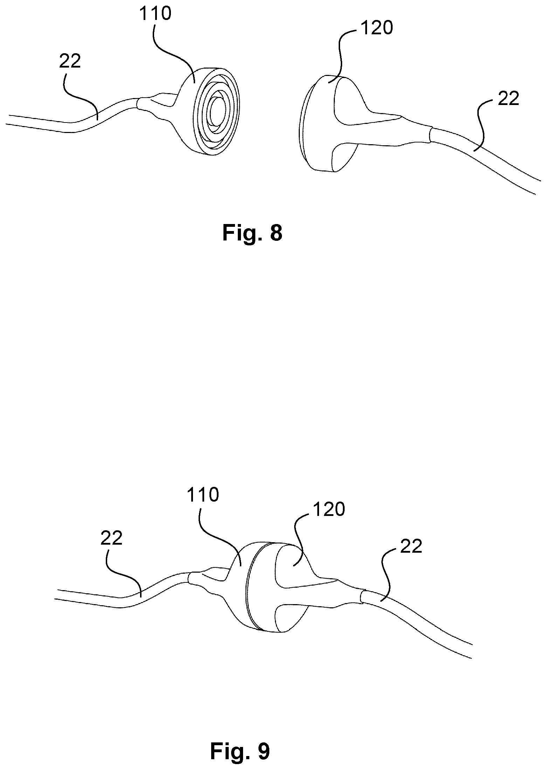

According to the present invention the power cord 22 can also be manufactured with a male plug 120 as shown in Figure 2c and 8.

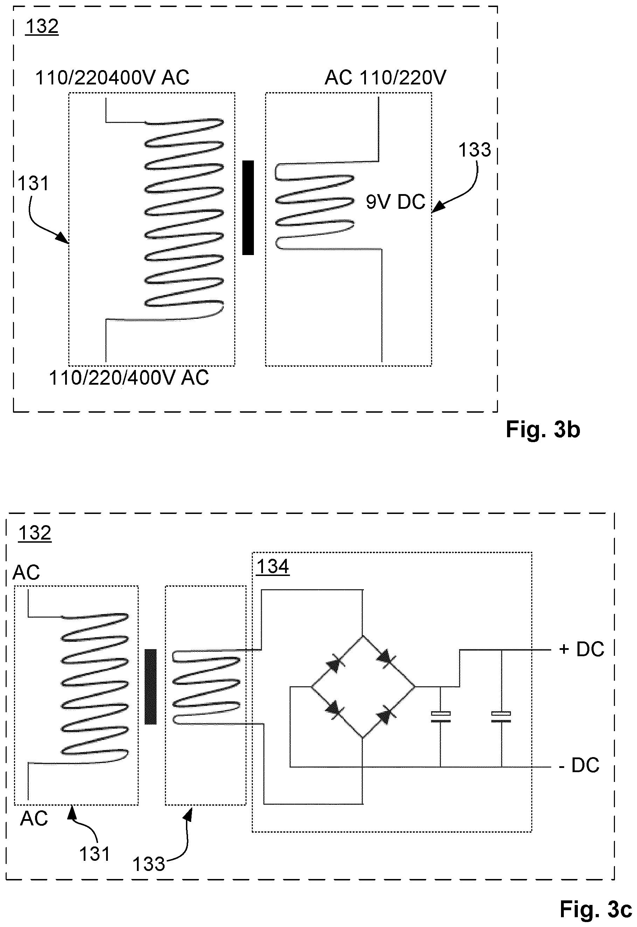

Reference is now made to Figures 3a-c. Accordingly, the female receptacle 110 is provided with primary side 131 of a transformer 132 and the male plug 120 is provided with secondary side 133 of the transformer 132, such that when the female receptacle 110 and male plug 120 are connected together via the magnetic fastening means 113, 123 the transformer 132 is capable of transferring power from the female receptacle 110 to the male plug 120 without physical contact between electrical power transferring parts.

By means of the transformer 132 the adapter assembly will be capable of transforming supplied AC current/voltage (e.g. 110 V, 220 V, 400 V) at given frequency (e.g. 50-60 Hz) to desired output AC current/voltage (e.g. 110 V, 220 V, 400 V) at desired frequency (e.g. 50-60 Hz) adapted to the electrical device connected to the adapter assembly via a power cord 22.

According to a further embodiment of the adapter assembly according to the present invention, the secondary side 133 of the transformer 130, i.e. the male plug 120 is further provided with a rectifier unit 134 capable of rectifying supplied AC current/voltage (e.g. 110 V, 220 V, 400 V) to desired DC current/voltage, such as e.g. 3, 5, 9, 12, 24 etc. Accordingly, the male plug 120 then removes the need for transformer and/or rectifier in the power cord 22 or electrical device.

The primary 131 and secondary 133 side of the transformer can be separated by air, iron-dust or iron. By use of iron dust or iron between the two sides 131, 133 this can be arranged in either one of the female receptacle 110 or male plug 120, or in both.

Accordingly, the male plug 120 can be arranged to the plug 20 of a power cord 22 until a supplier replaces the standard plug 20 with a plug with the integrated male plug 120 according to the present invention arranged for AC or DC according to the requirements of the electrical device.

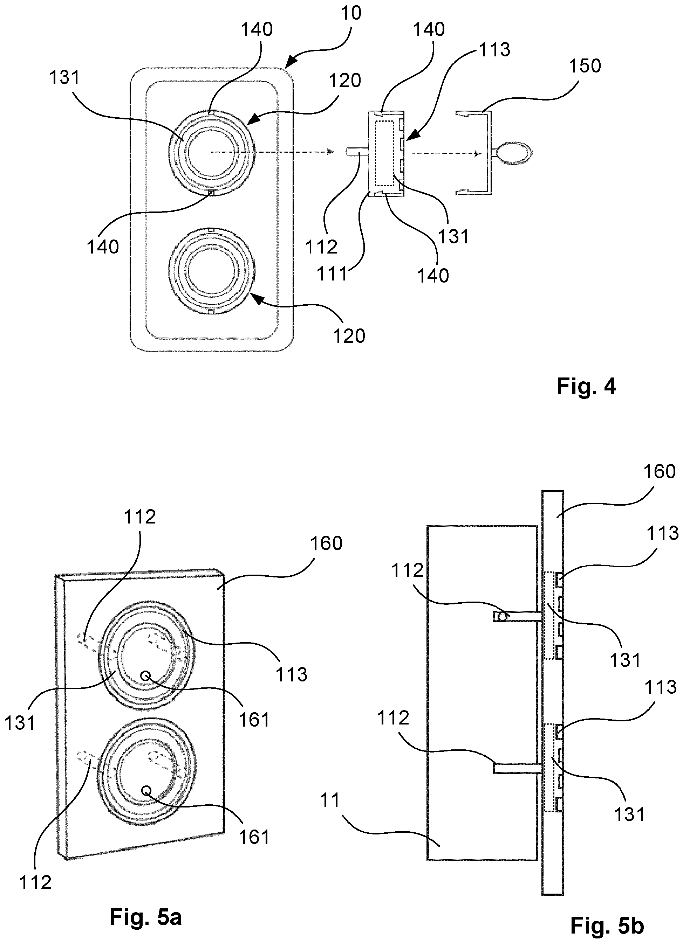

Reference is now made to Figure 4 showing a modified embodiment of female receptacle 110 as described above. According to a modified embodiment of the female receptacle 110 according to the present invention the main body 111 is provided with at least one track 140, preferably two diametrically opposite tracks 140, adapted for receiving a clip 150 designed to enter the tracks 140, By means of barbs on the clip 150 and corresponding recesses in the tracks 140 the clip 150 can engage the female receptacle 110 and the female receptacle 110 can in an easy manner be pulled out of engagement with or insertion into the electric receptacle 10.

Reference is now made to Figures 5a-b showing principle drawings of a second embodiment of a female receptacle 110 of the adapter assembly according to the present invention. In the second embodiment the female receptacle(s) 110 is/are integrated in a receptacle cover 160 which is adapted to replace the standard receptacle cover 20. In this embodiment the receptacle cover 160 is preassembled with the female receptacle(s) 110, such that the female receptacle(s) 110 are fixed therein, e.g. by that they are casted in place or fixed by appropriate fastening means. By this embodiment the standard receptacle cover 20 can be removed from the junction box 11 and the receptacle cover 160 with the integrated female receptacle(s) 110 can be connected to the junction box 11 by insertion of the conductive connectors 112 in the terminals 12 of the junction box 11 and fixation of the receptacle cover 160 to the junction box 11 by means of standard screw connections 161.

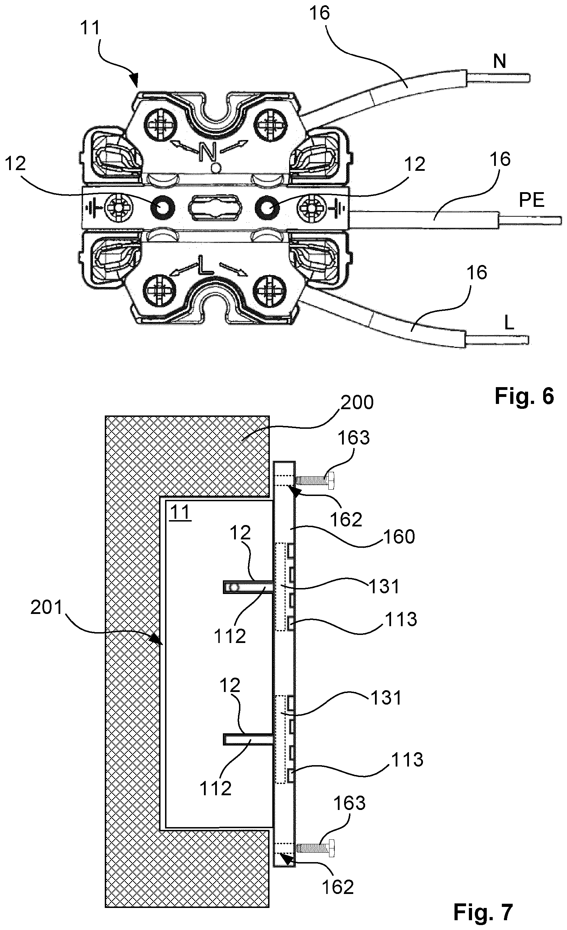

Reference is now made to Figure 6 which is an example of a standard junction box 11 regardless of supplier with conductive connectors 16 for connection to respective conductors of an AC power supply grid and terminals 12 for connection thereto. The mentioned conductive connectors 16 can be omitted and the conductors of the AC power supply grid can be connected directly to the junction box 11. Reference is also made to Figure 7 showing a principle drawing of a further embodiment of the adapter assembly according to the present invention where the above described receptacle cover 160 in addition to the female receptacle(s) 110 also has a junction box 11 integrated, prearranged to the receptacle cover 160 and female receptacle(s) 110. In such an embodiment the receptacle cover 160 is preferably provided with through holes 162 for accommodating fastening means 163, such as screws, enabling the receptacle cover 160 with the integrated junction box 11 and female receptacle(s) 110 to be fixed to a wall 200. By this embodiment the receptacle cover 160 according to the present invention will replace the need for a junction box 11 as used in the above described embodiments. By this embodiment is achieved a solution where the conductors of the AC power supply grid can be connected directly to the integrated junction box 11 or connected to conductive connectors 16 arranged thereto, and the junction box 11 can be received in a cavity 201 of a wall 200 and the receptacle cover 160 fixed to the wall 200 outside the cavity 201 as shown in Figure 7 or that the receptacle cover 160 is arranged for being fixed to a wall 200 surface for exterior arrangement.

According to a further embodiment of the present invention at least one safety device (not shown), in the form of e.g. a fuse, is arranged in either the female receptacle 110 or male plug 120, or in both.

Reference is now made to Figures 8-9 showing principle drawings of a further embodiment of the adapter assembly according to the present invention. Figure 8 shows a female male plug 110 connected to a power cord 22, and a male female receptacle 120 connected to a power cord 22. When the female male plug 110 is magnetically connected to the male female receptacle 120, an extension cord is provided. The magnet fastening means 113 of the female receptacle 110 is as previously disclosed recessed in the main body 111, while the magnetic fastening means 123 of the male plug 120 is protruding from the end of the main body 121, such than when the male plug 120 is arranged to the female receptacle 110, the magnetic fastening means 113 of the female receptacle 110 is arranged to receive and accommodate the magnetic fastening means 123 of the male plug 120. In a preferable embodiment the magnetic fastening means 113, 123 exhibit a mainly circular shape. By this is achieved an adequate magnetic connection that will exhibit sufficient magnetic force holding the male plug 120 to the female receptacle 110.

According to the present invention the adapter assembly is arranged for contactless transfer of electrical power between the electrical receptacle 110 and the male plug 120 by that the female receptacle 110 and male plug 120 are provided with magnetic or inductive means 131, 133, respectively, for contactless transfer of electrical power, which are connected with respective power cords 22. The female receptacle 110 is, as shown in Figures 3a-c, provided with primary side 131 of a transformer 132 and the male plug 120 is provided with secondary side 133 of the transformer 132, such that when the female receptacle 110 and male plug 120 are connected together via the magnetic fastening means 113, 123 the transformer 132 is capable of transferring power from the female receptacle 110 to the male plug 120 without physical contact between electrical power transferring parts.

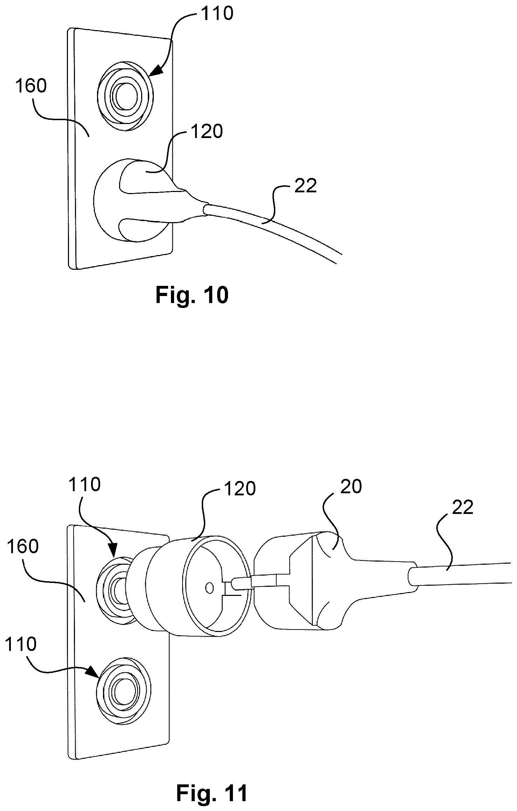

Reference is now made to Figures 10-11 showing principle drawings of a further embodiment of the adapter assembly according to the present invention. In the shown embodiment the female receptacles 110 are integrated in a receptacle cover 160 as a junction box, which is mounted on or in a wall in the same manner as a typical electrical receptacle. In this embodiment the receptacle cover box 160 is preassembled with the female receptacles 110, such that the female receptacles 110 are fixed therein, e.g. by that they are casted in place or fixed by appropriate fastening means.

In figure 10 a male plug 120 connected to a power cord 22 is magnetically connected to a lower female receptacle 110 integrated in the receptacle cover box 160. In figure 11 a standard plug 20 connected to a power cord 22 is inserted in the female receptacle 120, as previously disclosed, and the female receptacle 120 is magnetically connected to an upper female receptacle 110 integrated in the receptacle cover 160 or box.

## Claims

1. Adapter assembly for contactless transfer of electrical power, comprising a female receptacle (110) and a male plug (120), wherein the female receptacle (110) and the male plug (120) are provided with corresponding magnetic fastening means (113,123), respectively, for mutual connection by means of a magnetic force, wherein the female receptacle (110) and male plug (120) are provided with means for contactless transfer of electrical power in that the female receptacle (110) comprises a primary side (131) of a transformer (132) and the male plug (120) comprises a secondary side (133) of the transformer (132), such that when the female receptacle (110) and the male plug (120) are connected together via the magnetic fastening means (113,123), the transformer (132) is capable of transferring power from the female receptacle (110) to the male plug (120) without physical contact between power transferring parts, wherein
- the female receptacle (110) comprises a main body (111) accommodating the primary side (131) of the transformer (132) and the magnetic fastening means (113), the magnetic fastening means (113) being recessed in the main body (111),
and
- the male plug (120) comprises a main body (121) accommodating the secondary side (133) of the transformer (132) and the magnetic fastening means (123), the magnetic fastening means (123) protruding from the main body (121),
**characterized in that**
- a front side of the main body (111) of the female receptacle (110) comprises two or more circular female recesses with magnetic fastening means (113) arranged for receiving and accommodating the magnetic fastening means (123) of the male plug (120), and
- a front side of the main body (121) of the male plug (120) comprises two or more circular male protrusions with magnetic fastening means (123) adapted for arrangement to the magnet fastening means (113) of the female receptacle (110).

2. Adapter assembly according to claim 1, **characterized in that** the female receptacle (110) is connected to an AC power supply cord (22).

3. Adapter assembly according to claim 1, **characterized in that** the male plug (120) is connected to an AC power supply cord (22).

4. Adapter assembly according to claim 2 and 3, **characterized in that** the female receptacle (110) is a female connector and the male plug (120) is a male connector, for connection of two AC power supply cords (22).

5. Adapter assembly according to claim 1, **characterized in that** two or more female receptacles (110) are provided in the main body, one above the other, wherein the main body is a receptacle cover or cover box (160) arranged for placement on a wall, and the female receptacles (110) are connected to an AC power supply.

6. Adapter assembly to according to claim 1, **characterized in that** two or more female receptacles (110) and a junction box (11) are integrated in a receptacle cover (160) adapted for arrangement in connection with a cavity (201) of a wall (200).

7. Adapter assembly according to claim 1, **characterized in that** the transformer (132) is arranged for transforming supplied AC current/voltage at a certain frequency to a desired output AC current/voltage of a desired frequency.

8. Adapter assembly according to claim 1, **characterized in that** the transformer (132) is arranged for transforming supplied AC current/voltage to a desired DC current/voltage.

9. Adapter assembly according to claim 8, **characterized in that** the female receptacle (110) and/or the male plug (120) is provided with a rectifier unit (134) connected at the secondary side (133) of the transformer (132).

10. Adapter assembly according to claim 1, **characterized in that** the female receptacle (110) is provided with at least one track (140) adapted for receiving a clip (150) for easy handling of the female receptacle (110) in connection with arrangement to and/or from a standard electrical receptacle (10).

11. Adapter assembly according to claim 1, **characterized in that** the female receptacle (110) is adapted for connection to an AC power supply at one end and the male plug (120) at the other end, the male plug (120) being adapted for connection to a power cord (22) at one end and to the female receptacle (110) at the other end, wherein the female receptacle (110) and male plug (120) are provided with said magnetic fastening means (113, 123), respectively.

12. Female receptacle (110) for contactless transfer of electrical power, wherein the female receptacle (110) is provided with magnetic fastening means (113) and with means for contactless transfer of electrical power in that the female receptacle (110) comprises a primary side (131) of a transformer (132) for transferring power from the female receptacle (110) to a male plug (120) without physical contact between power transferring parts,
- the female receptacle (110) comprises a main body (111) accommodating the primary side (131) of the transformer (132) and the magnetic fastening means (113), the magnetic fastening means (113) being recessed in the main body (111),
**characterized in that** a front side of the main body (111) comprises two or more circular female recesses with magnetic fastening means (113) arranged for receiving and accommodating magnetic fastening means (123) of the male plug (120).

13. Male plug (120) for contactless transfer of electrical power, wherein the male plug (120) is provided with magnetic fastening means (123) and with means for contactless transfer of electrical power in that the male plug (120) comprises a secondary side (133) of a transformer (132) for transferring power from the male plug (120) to a female receptacle (110) without physical contact between power transferring parts,
- the male plug (120) comprises a main body (121) accommodating the secondary side (133) of the transformer (132) and the magnetic fastening means (123), the magnetic fastening means (123) protruding from the main body (121)
**characterized in that** a front side of the main body (121) comprises two or more circular male protrusions with magnetic fastening means (123) adapted for arrangement to magnet fastening means (113) of the female receptacle (110).

## Patentansprüche

1. Adapteranordnung zur kontaktlosen Übertragung von elektrischer Energie, mit einer Chassisbuchse (110) und einem Stecker (120), wobei die Chassisbuchse (110) und der Stecker (120) jeweils mit entsprechenden magnetischen Befestigungseinrichtungen (113, 123) zur gegenseitigen Verbindung mittels Magnetkraft versehen sind, wobei die Chassisbuchse (110) und der Stecker (120) mit einer Einrichtung zur kontaktlosen Übertragung von elektrischer Energie versehen sind, indem die Chassisbuchse (110) eine Primärseite (131) eines Transformators (132) umfasst und der Stecker (120) eine Sekundärseite (133) des Transformators (132) umfasst, so dass, wenn die Chassisbuchse (110) und der Stecker (120) über die magnetischen Befestigungseinrichtungen (113, 123) miteinander verbunden sind, der Transformator (132) in der Lage ist, Strom von der Chassisbuchse (110) auf den Stecker (120) zu übertragen, ohne dass ein physischer Kontakt zwischen den stromübertragenden Teilen besteht, wobei
- die Chassisbuchse (110) einen Hauptkörper (111) umfasst, der die Primärseite (131) des Transformators (132) und die magnetische Befestigungseinrichtung (113) unterbringt, wobei die magnetische Befestigungseinrichtung (113) in dem Hauptkörper (111) ausgespart ist,
und
- der Stecker (120) einen Hauptkörper (121) umfasst, der die Sekundärseite (133) des Transformators (132) und die magnetische Befestigungseinrichtung (123) unterbringt, wobei die magnetische Befestigungseinrichtung (123) aus dem Hauptkörper (121) übersteht,
**dadurch gekennzeichnet, dass**
- eine Vorderseite des Hauptkörpers (111) der Chassisbuchse (110) zwei oder mehr kreisförmige Chassisbuchsenaussparungen mit einer magnetischen Befestigungseinrichtung (113) aufweist, die eingerichtet ist, um die magnetische Befestigungseinrichtung (123) des Steckers (120) aufzunehmen und unterzubringen, und
- eine Vorderseite des Hauptkörpers (121) des Steckers (120) zwei oder mehr kreisförmige Überstände mit einer magnetischen Befestigungseinrichtung (123) aufweist, die eingerichtet ist, um die magnetische Befestigungseinrichtung (113) der Chassisbuchse (110) anzuordnen.

2. Adapteranordnung nach Anspruch 1, **dadurch gekennzeichnet, dass** die Chassisbuchse (110) mit einem Wechselstromversorgungskabel (22) verbunden ist.

3. Adapteranordnung nach Anspruch 1, **dadurch gekennzeichnet, dass** der Stecker (120) mit einem Wechselstromversorgungskabel (22) verbunden ist.

4. Adapteranordnung nach Anspruch 2 und 3, **dadurch gekennzeichnet, dass** die Chassisbuchse (110) ein weiblicher Stecker und der Stecker (120) ein männlicher Stecker ist, um zwei Wechselstromversorgungsleitungen (22) anzuschließen.

5. Adapteranordnung nach Anspruch 1, **dadurch gekennzeichnet, dass** zwei oder mehr Chassisbuchsen (110) in dem Hauptkörper übereinander vorgesehen sind, wobei der Hauptkörper eine Chassisbuchsenabdeckung oder ein Abdeckkasten (160) ist, die oder der zur Platzierung an einer Wand angeordnet ist, und die Chassisbuchsen (110) mit einer Wechselstromversorgung verbunden sind.

6. Adapteranordnung nach Anspruch 1, **dadurch gekennzeichnet, dass** zwei oder mehr Chassisbuchsen (110) und eine Anschlussdose (11) in einem Chassisbuchsendeckel (160) integriert sind, der zur Anordnung in Verbindung mit einer Vertiefung (201) einer Wand (200) geeignet ist.

7. Adapteranordnung nach Anspruch 1, **dadurch gekennzeichnet, dass** der Transformator (132) für die Umwandlung des zugeführten Wechselstroms/der zugeführten Wechselspannung mit einer bestimmten Frequenz in einen gewünschten Ausgangswechselstrom/eine gewünschte Ausgangsspannung mit einer gewünschten Frequenz eingerichtet ist.

8. Adapteranordnung nach Anspruch 1, **dadurch gekennzeichnet, dass** der Transformator (132) für die Umwandlung von zugeführtem Wechselstrom/zugeführter Wechselspannung in einen gewünschten Gleichstrom/eine gewünschte Gleichspannung eingerichtet ist.

9. Adapteranordnung nach Anspruch 8, **dadurch gekennzeichnet, dass** die Chassisbuchse (110) und/oder der Stecker (120) mit einer Gleichrichtereinheit (134) versehen sind/ist, die an die Sekundärseite (133) des Transformators (132) angeschlossen ist.

10. Adapteranordnung nach Anspruch 1, **dadurch gekennzeichnet, dass** die Chassisbuchse (110) mit zumindest einer Spur (140) versehen ist, die zur Aufnahme eines Clip (150) zur einfachen Handhabung der Chassisbuchse (110) in Verbindung mit der Anordnung zu und/oder von einer Standard-Steckdose (10) eingerichtet ist.

11. Adapteranordnung nach Anspruch 1, **dadurch gekennzeichnet, dass** die Chassisbuchse (110) eingerichtet ist, um an einem Ende an eine Wechselstromversorgung und am anderen Ende an den Stecker (120) angeschlossen zu werden, wobei der Stecker (120) eingerichtet ist, um mit einem Stromkabel (22) an einem Ende und mit der Chassisbuchse (110) am anderen Ende verbunden zu werden, wobei die Chassisbuchse (110) und der Stecker (120) jeweils mit den magnetischen Befestigungseinrichtungen (113, 123) versehen sind.

12. Chassisbuchse (110) zur kontaktlosen Übertragung von elektrischer Energie, wobei die Chassisbuchse (110) mit einer magnetischen Befestigungseinrichtung (113) und mit einer Einrichtung zur kontaktlosen Übertragung von elektrischer Energie versehen ist, indem die Chassisbuchse (110) eine Primärseite (131) eines Transformators (132) zur Übertragung von Energie von der Chassisbuchse (110) zu einem Stecker (120) ohne physischen Kontakt zwischen stromübertragenden Teilen umfasst,
- wobei die Chassisbuchse (110) einen Hauptkörper (111) umfasst, der die Primärseite (131) des Transformators (132) und die magnetische Befestigungseinrichtung (113) unterbringt, wobei die magnetische Befestigungseinrichtung (113) in dem Hauptkörper (111) ausgespart ist,
**dadurch gekennzeichnet, dass** eine Vorderseite des Hauptkörpers (111) zwei oder mehr kreisförmige weibliche Aussparungen mit einer magnetischen Befestigungseinrichtung (113) umfasst, die zur Aufnahme und Unterbringung einer magnetischen Befestigungseinrichtung (123) des Steckers (120) eingerichtet ist oder sind.

13. Stecker (120) zur kontaktlosen Übertragung von elektrischer Energie, wobei der Stecker (120) mit einer magnetischen Befestigungseinrichtung (123) und mit einer Einrichtung zur kontaktlosen Übertragung von elektrischer Energie versehen ist, indem der Stecker (120) eine Sekundärseite (133) eines Transformators (132) zur Übertragung von Energie von dem Stecker (120) zu einer Chassisbuchse (110) ohne physischen Kontakt zwischen stromübertragenden Teilen umfasst,
- wobei der Stecker (120) einen Hauptkörper (121) umfasst, der die Sekundärseite (133) des Transformators (132) und die magnetische Befestigungseinrichtung (123) unterbringt, wobei die magnetische Befestigungseinrichtung (123) aus dem Hauptkörper (121) übersteht,
**dadurch gekennzeichnet, dass** eine Vorderseite des Hauptkörpers (121) zwei oder mehr kreisförmige männliche Überstände mit einer magnetischen Befestigungseinrichtung (123) umfasst, die eingerichtet sind, um an einer magnetischen Befestigungseinrichtung (113) der Chassisbuchse (110) angeordnet zu werden.

## Revendications

1. Ensemble adaptateur pour le transfert sans contact d'énergie électrique, comprenant une embase femelle (110) et une fiche mâle (120), dans lequel l'embase femelle (110) et la fiche mâle (120) sont pourvues de moyens de fixation magnétiques (113, 123) correspondants, respectivement, pour une connexion mutuelle par le moyen d'une force magnétique, dans lequel l'embase femelle (110) et la fiche mâle (120) sont pourvues de moyens de transfert sans contact d'énergie électrique en ce que l'embase femelle (110) comprend un côté primaire (131) d'un transformateur (132) et la fiche mâle (120) comprend un côté secondaire (133) du transformateur (132), de manière que lorsque l'embase femelle (110) et la fiche mâle (120) sont connectées ensemble *via* les moyens de fixation magnétiques (113, 123), le transformateur (132) est capable de transférer de l'énergie de l'embase femelle (110) à la fiche mâle (120) sans contact physique entre les parties de transfert d'énergie, dans lequel
- l'embase femelle (110) comprend un corps principal (111) accueillant le côté primaire (131) du transformateur (132) et les moyens de fixation magnétiques (113), les moyens de fixation magnétiques (113) se situant en retrait dans le corps principal (111), et
- la fiche mâle (120) comprend un corps principal (121) accueillant le côté secondaire (133) du transformateur (132) et les moyens de fixation magnétiques (123), les moyens de fixation magnétiques (123) faisant saillie depuis le corps principal (121), **caractérisé en ce que**
- un côté frontal du corps principal (111) de l'embase femelle (110) comprend deux ou plusieurs renfoncements femelles circulaires pourvus de moyens de fixation magnétiques (113) agencés pour la réception et l'accueil des moyens de fixation magnétiques (123) de la fiche mâle (120), et
- un côté frontal du corps principal (121) de la fiche mâle (120) comprend deux protubérances mâles circulaires ou plus pourvues de moyens de fixation magnétiques (123) adaptés pour être agencés sur les moyens de fixation magnétiques (113) de l'embase femelle (110).

2. Ensemble adaptateur selon la revendication 1, **caractérisé en ce que** l'embase femelle (110) est connectée à un câble d'alimentation AC (22).

3. Ensemble adaptateur selon la revendication 1, **caractérisé en ce que** la fiche mâle (120) est connectée à un câble d'alimentation AC (22).

4. Ensemble adaptateur selon les revendications 2 et 3, **caractérisé en ce que** l'embase femelle (110) est un connecteur femelle et la fiche mâle (120) est un connecteur mâle, pour la connexion de deux câbles d'alimentation AC (22).

5. Ensemble adaptateur selon la revendication 1, **caractérisé en ce que** deux ou plusieurs embases femelles (110) sont prévues dans le corps principal, l'une au-dessus de l'autre, dans lequel le corps principal est un cache d'embase ou une boîte à couvercle (160) prévu(e) pour une mise en place sur un mur, et les embases femelles (110) sont connectées à une source d'alimentation AC.

6. Ensemble adaptateur selon la revendication 1, **caractérisé en ce que** deux ou plusieurs embases femelles (110) et une boîte de connexion (11) sont intégrées dans un cache de réceptacle (160) adapté pour être agencé en connexion avec une cavité (201) d'un mur (200).

7. Ensemble adaptateur selon la revendication 1, **caractérisé en ce que** le transformateur (132) est agencé pour la transformation d'un courant/tension AC fourni(e) à une certaine fréquence en une sortie de courant/tension AC souhaité(e) d'une fréquence souhaitée.

8. Ensemble adaptateur selon la revendication 1, **caractérisé en ce que** le transformateur (132) est agencé pour la transformation d'un courant/tension AC fourni(e) en un(e) courant/tension DC souhaité(e).

9. Ensemble adaptateur selon la revendication 8, **caractérisé en ce que** l'embase femelle (110) et/ou la fiche mâle (120) est(sont) pourvue(s) d'une unité redresseur (134) connectée au côté secondaire (133) du transformateur (132).

10. Ensemble adaptateur selon la revendication 1, **caractérisé en ce que** l'embase femelle (110) est pourvue d'au moins une piste (140) adaptée pour la réception d'un clip (150) pour faciliter la manipulation de l'embase femelle (110) en connexion avec l'agencement vers/depuis un réceptacle électrique standard (10).

11. Ensemble adaptateur selon la revendication 1, **caractérisé en ce que** l'embase femelle (110) est adaptée pour la connexion à une source d'alimentation AC à une extrémité et la fiche mâle (120) à l'autre extrémité, la fiche mâle (120) étant adaptée pour être connectée à un câble d'alimentation (22) à une extrémité et à l'embase femelle (110) à l'autre extrémité, dans lequel l'embase femelle (110) et la fiche mâle (120) sont respectivement pourvues desdits moyens de fixation magnétiques (113, 123),.

12. Embase femelle (110) pour le transfert sans contact d'énergie électrique, dans lequel l'embase femelle (110) est pourvue de moyens de fixation magnétiques (113) et de moyens de transfert sans contact d'énergie électrique en ce que l'embase femelle (110) comprend un côté primaire (131) d'un transformateur (132) pour le transfert d'énergie de l'embase femelle (110) à une fiche mâle (120) sans contact physique entre des parties de transfert d'énergie,
- l'embase femelle (110) comprend un corps principal (111) accueillant le côté primaire (131) du transformateur (132) et les moyens de fixation magnétiques (113), les moyens de fixation magnétiques (113) se situant en retrait dans le corps principal (111),
**caractérisé en ce que** un côté frontal du corps principal (111) comprend deux ou plusieurs renfoncements femelles circulaires avec des moyens de fixation magnétiques (113) agencés pour la réception et l'accueil de moyens de fixation magnétiques (123) de la fiche mâle (120).

13. Fiche mâle (120) pour le transfert sans contact d'énergie électrique, dans lequel la fiche mâle (120) est pourvue de moyens de fixation magnétiques (123) et de moyens de transfert sans contact d'énergie électrique en ce que la fiche mâle (120) comprend un côté secondaire (133) d'un transformateur (132) pour le transfert d'énergie de la fiche mâle (120) à une embase femelle (110) sans contact physique entre des parties de transfert d'énergie,
- la fiche mâle (120) comprend un corps principal (121) accommodant le côté secondaire (133) du transformateur (132) et les moyens de fixation magnétiques (123), les moyens de fixation magnétiques (123) faisant saillie depuis le corps principal (121)
**caractérisé en ce qu'**un côté frontal du corps principal (121) comprend deux protubérances mâles circulaires ou plus pourvues de moyens de fixation magnétiques (123) adaptés pour être agencés sur les moyens de fixation magnétiques (113) de l'embase femelle (110).
